Europäisches Patentamt

European Patent Office

Office européen des brevets

(11) Veröffentlichungsnummer: **0 285 763**
**B1**

(12) **EUROPÄISCHE PATENTSCHRIFT**

(45) Veröffentlichungstag der Patentschrift:
26.09.90

(51) Int. Cl.⁵: **B60T 8/48**

(21) Anmeldenummer: 88101746.1

(22) Anmeldetag: 06.02.88

(54) Vorrichtung zum Synchronisieren der Drehzahl von Antriebsrädern eines Fahrzeugs beim Anfahren.

(30) Priorität: 05.03.87 DE 3707068

(43) Veröffentlichungstag der Anmeldung:
12.10.88 Patentblatt 88/41

(45) Bekanntmachung des Hinweises auf die Patenterteilung:
26.09.90 Patentblatt 90/39

(84) Benannte Vertragsstaaten:
AT DE FR GB SE

(56) Entgegenhaltungen:
DE-C- 3 127 301
DE-C- 3 534 443
GB-A- 2 119 883
GB-A- 2 128 278

(73) Patentinhaber: ROBERT BOSCH GMBH, Postfach 50,
D-7000 Stuttgart 1(DE)

(72) Erfinder: Jonner, Wolf-Dieter, Burgunderstrasse 25,
D-7141 Beilstein(DE)
Erfinder: Käs, Günter, Markelsheimer Strasse 70,
D-7000 Stuttgart 49(DE)
Erfinder: Maisch,Wolfgang,Dr.Dipl.-Ing., Elbinger Weg 4,
D-7141 Schwieberdingen(DE)
Erfinder: Stegmaier,Alwin, Breslauer Strasse 3,
D-7141 Schwieberdingen(DE)

## Beschreibung

### Stand der Technik

Die Erfindung geht aus von einer Vorrichtung zum Synchronisieren der Drehzahl von Antriebsrädern eines mit einer druckmittelgesteuerten Bremseinrichtung ausgerüsteten Fahrzeugs beim Anfahren durch Belegen des drehzahlhöheren Antriebsrades mit dosiertem Bremsdruck der im Oberbegriff des Anspruchs 1 definierten Gattung.

Bei einer bekannten Anfahrhilfe dieser Art ("Fluid", Januar 1984, S. 11) ist das Stellglied als Membranmotor ausgebildet, der mit einem aus dem Stellsignal abgeleiteten Luftdruck oder Vakuum angesteuert wird und über mit der Memebran gekoppelte Antriebsglieder den einen oder anderen Steuerkolben der miteinander fluchtenden Bremsdrucksteller betätigt. Ein solches Stellglied ist relativ langsam und benötigt einen recht großen Luft- bzw. Vakuumspeicher, der bei Dieselmotoren eine gesonderte Vakuumpumpe erforderlich macht.

Bei einer ebenfalls bekannten Vorrichtung der eingangs genannten Art (GB-PS 2 128 278) besteht das Stellglied aus zwei Elektromagneten, an deren Anker sich jeweils ein Steuerkolben der beiden Bremsdrucksteller unter der Wirkung seiner Rückstellfeder abstützt. Die Stellsignale werden entsprechend positiver oder negativer Drehzahldifferenz dem einen oder anderen Elektromagneten als Erregerstrom zugeführt, wodurch der zugeordnete Steuerkolben in Richtung Verkleinerung des von ihm begrenzten Volumens des Steuerzylinders verschoben und damit ein Bremsdruck in den angeschlossenen Radbremszylinder eingesteuert wird. Die für ein solches Stellglied erforderlichen schweren Elektromagnete lassen eine nur relativ langsame Ankerbewegung zu, so daß nur eine träge Bremsdrucksteuerung möglich ist.

### Vorteile der Erfindung

Die erfindungsgemäße Anfahrhilfe-Vorrichtung mit den kennzeichnenden Merkmalen des Anspruchs 1 hat den Vorteil einer gegenüber pneumatischen Stellgliedern höheren Stellgeschwindigkeit und eines gegenüber elektromagnetischen Stellgliedern höheren Druckbereichs, eines kleineren Bauvolumens und eines geringeren Energiebedarfs. Die Vorrichtung ist weitgehend fehlersicher, da bei Ausfall des elektrischen Stellmotors die Stellkolben in ihre Nullage zurückgehen und kein Bremsdruck eingesteuert wird. Gegenüber pneumatischen Versionen entfallen voluminöse Speicher und die Notwendigkeit einer Luftdruckversorgung. Die erfindungsgemäße Vorrichtung ist insbesondere in Verbindung mit den Ausführungsbeispielen gemäß den Ansprüchen 6 - 9 konstruktiv sehr einfach sowie kostengüstig herstellbar und eignet sich damit besonders für kleinere, preisgünstige Fahrzeuge. Sie ist unabhängig von der Bremskreisaufteilung im Fahrzeug.

Bei den Ausführungsformen der Erfindung gemäß den Ansprüchen 3 - 5 ist das die Drehbewegung der Rotorwelle in eine Verschiebebewegung umsetzende Umsetzgetriebe reibarm ausgebildet. Eine für Spindel- oder Schneckengetriebe typische Selbsthemmung tritt daher nicht auf. Die Steuerkolben gehen nach Abschalten des Stellmotors unter der Wirkung ihrer Rückstellfedern in die Ausgangsstellung zurück, in welcher kein Druck in die Radbremszylinder eingesteuert wird und die Verbindung zwischen Hauptbremszylinder und Radbremszylinder von dem Ventil freigegeben ist.

Eine vorteilhafte Ausführungsform der Erfindung ergibt sich insbesondere aus Anspruch 6. Durch diese konstruktive Maßnahmen wird die Voraussetzung für einen preiswerten, montagefreundlichen Bremswertsteller geschaffen, bei welchem sich mit den weiteren konstruktiven Maßnahmen gemäß dem Ausführungsbeispiel nach Anspruch 7 das Ventil und die Federn (Rückstellfeder für den Steuerkolben und Ventilfeder) als komplette Einbaugruppe vormontieren läßt. Diese Einbaugruppe wird dann in den Steuerzylinder eingeschoben, wonach der Steuerkolben eingesetzt und der Steuerzylinder mit einem Abschlußglied abgeschlossen wird. Die Montagezeit verkürzt sich damit erheblich. Durch das axial angeordnete Ventil ist das Vorsehen nur einer Dichtungsmanschette am Steuerkolben ausreichend.

Eine vorteilhafte Ausführungsform der Erfindung ergibt sich dabei aus Anspruch 8. Durch diese Maßnahmen wird zusätzlich die Herstellung und Montage des Bremsdruckstellers vereinfacht. Durch eine geeignete Wahl des Konuswinkels sowie des Übergreifungsverhältnisses (Hinterschnitt) des Gummiteils und des Tragbundes einerseits und der Metallarmierung und des Gummiteils andererseits läßt sich eine sichere und zuverlässige Funktion des Ventils erreichen. Als vorteilhaft hat sich dabei ein Flankenwinkel des konischen Gummiteils von 5 - 10° und ein Durchmesserverhältnis von Übergreifungsrand (lichter Durchmesser) des Gummiteils zum Außendurchmesser des Tragbundes von 0,6 - 0,8 erwiesen.

Eine vorteilhafte Ausführungsform der Erfindung ergibt sich auch aus Anspruch 9. Durch die Trennung von Steuerkolben und Antriebsbolzen wird eine Querkrafteinleitung in die Lauffläche des Steuerkolbens und eine damit verbundene Schwergängigkeit des Steuerkolbens vermieden.

### Zeichnung

Die Erfindung ist anhand von in der Zeichnung dargestellten Ausführungsbeispielen in der nachfolgenden Beschreibung näher erläutert. Es zeigen jeweils in schematischer Darstellung:

Fig. 1 ausschnittweise eine Prinzipskizze einer hydraulischen Bremseinrichtung für einen PKW mit einer Anfahrhilfe-Vorrichtung,

Fig. 2 und 3 jeweils einen Längsschnitt einer Anfahrhilfe-Vorrichtung gemäß zweier weiterer Ausführungsbeispiele,

Fig. 4 einen Längsschnitt eines Bremsdruckstellers in den Anfahrhilfe-Vorrichtungen in Fig. 1 - 3 gemäß einem bevorzugten Ausführungsbeispiel,

Fig. 5 eine vormontierte Baugruppe des Bremsdruckstellers in Fig. 4.

Beschreibung der Ausführungsbeispiele

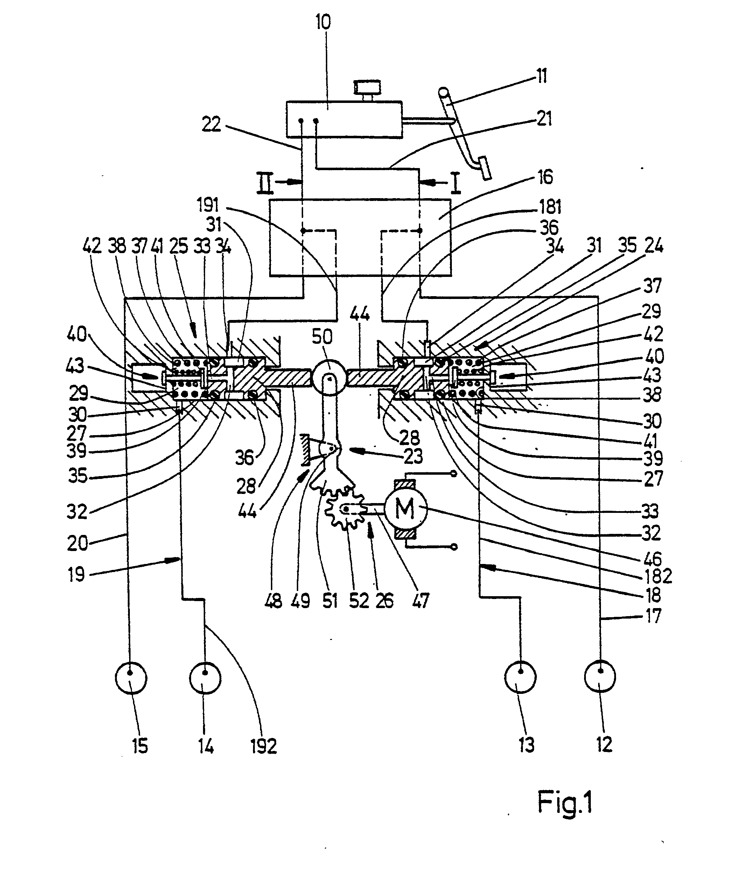

Von der in Fig. 1 auschnittweise und schematisch abgebildeten hydraulischen Bremseinrichtung für ein Personenkraftfahrzeug (PKW) sind lediglich ein Hauptbremszylinder 10, der von einem Bremspedal 11 mechanisch betätigt wird, und die Radbremszylinder 12 - 15 für die Fahrzeugräder dargestellt. Jeweils zwei Radbremszylinder 12,13 bzw. 14,15 sind in zwei unabhängigen Bremskreisen I bzw. II angeordnet, wobei die Radbremszylinder 13,14 den Antriebsrädern, hier den Hinterrädern, zugeordnet sind. Die Bremseinrichtung ist üblicherweise noch mit einem Antiblockiersystem (ABS) 16 ausgerüstet, das in die Bremskreise I und II zwischen Hauptbremszylinder 10 und den Radbremszylindern 12 - 15 eingeschaltet ist. Dabei ist jeder Radbremszylinder 12 - 15 über eine separate Bremsleitung mit dem Antiblockiersystem 16 verbunden, das über je eine Druckleitung 21 bzw. 22 pro Bremskreis I bzw. II an dem Hauptbremszylinder 16 angeschlossen ist.

In den Bremsleitungen 18,19 zu den Radbremszylindern 13,14 der Antriebsräder ist die eine Anfahrhilfe darstellende Vorrichtung zum Synchronisieren der Drehzahl der Antriebsräder beim Anfahren, im folgenden kurz Anfahrhilfe-Vorrichtung 23 genannt, eingeschaltet. Sie besteht aus zwei Bremsdruckstellern 24,25 und aus einem Stellglied 26 zum Betätigen der Bremsdrucksteller 24,25 in Abhängigkeit von der Drehzahldifferenz der Antriebsräder beim Anfahren. Wie nicht besonders dargestellt ist, wird die Drehzahl der Antriebsräder durch Radsensoren erfaßt, die ohnehin für das Antiblockiersystem 16 erforderlich sind. Die beiden Bremsdrucksteller 24,25 sind identisch ausgebildet und axial fluchtend zueinander ausgerichtet. Jeder Bremsdrucksteller 24 bzw. 25 weist einen Steuerzylinder 27 auf, in welchem ein Steuerkolben 28 axial verschieblich angeordnet ist. Der Steuerkolben 28 begrenzt einen Steuerraum 29, der eine Anschlußöffnung 30 zum Anschließen des zum Radbremszylinder 13 bzw. 14 des Antriebsrades führenden Bremsleitungsabschnittes 182 bzw. 192 aufweist. Der Steuerkolben 28 trägt eine Ringnut 31, die über eine Querbohrung 32 mit einer im Steuerraum 29 mündenden Axialbohrung 33 im Steuerkolben 28 in Verbindung steht. Die Ringnut 31 überdeckt in jeder Stellung des Steuerkolbens 28 eine Anschlußöffnung 34, an welcher der zu dem Antiblockiersystem 16 führende Abschnitt 181 bzw. 191 der Bremsleitung 18 bzw. 19 angeschlossen ist. Beidseitig der Ringnut 31 ist der Steuerkolben 28 gegenüber dem Steuerzylinder 27 durch Dichtungsmanschetten 35 bzw. 36 abgedichtet. Der Steuerkolben 28 wird durch eine im Steuerraum 29 angeordnete Rückstellfeder 37, die sich einerseits an dem Steuerkolben 28 und andererseits an einem Anschlag 38 in dem Steuerraum 29 abstützt, in seiner Grundstellung gehalten. Die Öffnung der Axialbohrung 33 im Steuerkolben 28 ist von einem Ventilsitz 39 umgeben, der mit einem Ventilglied 41 eines Ventils 40 zusammenwirkt. Das Ventilglied 41 liegt mit Abstand vor dem Ventilsitz 39 unter der Wirkung einer Ventilfeder 42 an einem Anschlag 43 an. Bei Verschiebung des Steuerkolbens 28 setzt sich der Ventilsitz 39 auf das Ventilglied 41 unter Abdichtung der stirnseitigen Mündung der Axialbohrung 33 auf und verschiebt entgegen der Wirkung der Ventilfeder 42 bei geschlossenem Ventil 40 das Ventilglied 41. Der Steuerkolben 28 ragt mit einem einstückigen Antriebsbolzen 44 aus dem Steuerzylinder 27 des Bremsdruckstellers 24 bzw. 25 heraus.

Das Stellglied 26 ist als elektrischer Stellmotor 46, und zwar als Rotationsmotor, ausgebildet, dessen Rotorwelle 47 über ein die Drehbewegung der Rotorwelle 47 in eine Linearbewegung umsetzendes Umsetzgetriebe 48 jeweils einen der beiden Antriebsbolzen 44 der Bremsdrucksteller 24,25 betätigt. Das Umsetzgetriebe 48 weist hierzu einen zweiarmigen Hebel 49 auf, an dessen einem Hebelende eine Rolle 50 und an dessen anderem Hebelende ein Zahnsegment 51 angeordnet ist. Das Zahnsegment 51 kämmt mit einem mit der Rotorwelle 47 umlaufenden Zahnrad 52, während an der Rolle 50 auf diametral gegenüberliegenden Seiten die Antriebsbolzen 44 der Steuerkolben 28 der beiden Bremsdrucksteller 24,25 unter der Wirkung der Rückstellfedern 37 anliegen.

Die Wirkungsweise der Anfahrhilfe-Vorrichtung 23 ist wie folgt:

Im inaktiven Zustand der Anfahrhilfe-Vorrichtung 23 sind die Ventile 40 in den beiden Bremsdruckstellern 24,25 geöffnet, so daß die beiden Bremsleitungen 18,19 zwischen dem Antiblockiersystem 16 und den Radbremszylindern 13,14 der Antriebsräder durchgängig sind und ein evtl. durch Betätigen des Bremspedals 11 über den Hauptbremszylinder 10 eingesteuerter Bremsdruck an die Radbremszylinder 13,14 gelangt. Dreht beim Anfahren eines der beiden Antriebsräder 13,14 infolge schlechterer Bodenhaftung schneller als das andere, so wird aus den von den Radsensoren an eine nicht dargestellte Steuervorrichtung gelieferten Drehzahlsignalen ein der Drehzahldifferenz proportionales Stellsignal generiert, das an den Stellmotor 46 gelangt. Die Rotorwelle 47 wird entsprechend diesem Stellsignal verdreht, wobei das mit dem Zahnsegment 51 kämmende Zahnrad 52 den Hebel 49 je nach Drehrichtung der Rotorwelle 47 nach links oder rechts verschwenkt. Weist das dem Radbremszylinder 13 zugeordnete Antriebsrad die höhere Drehzahl auf, so wird der Hebel 49 nach rechts verschwenkt. Dadurch wird über die Rolle 50 der Steuerkolben 28 des Bremsdruckstellers 24 nach rechts verschoben. Nach einem geringen Verschiebeweg setzt sich der Ventilsitz 39 auf das Ventilglied 41 auf, und die Bremsleitung 18 wird aufgetrennt, wobei die Verbindung des Steuerraums 29 zu dem Bremsleitungsabschnitt 181 abgedichtet ist. Mit der weiteren Verschiebung des Steuerkolbens 28 wird das Volumen des Steuerraums 29 bei geschlossen gehaltenem Ventil 40 weiter reduziert und dadurch ein Bremsdruck über den Bremsleitungsabschnitt 182 in den Radbremszylinder 13 eingesteuert. Der Steuerkolben 28 wird dabei solange verschoben, bis der in den Radbremszylinder 13 eingesteuerte Bremsdruck die Drehzahldifferenz zwischen den Antriebsrädern zu Null werden läßt. Nach dem Anfahrvorgang geht der Steuerkolben 28 unter der Wirkung seiner Rückstellfeder 37 wieder in die Fig. 1 dargestellte Grundstellung zurück. Der gleiche Vorgang spielt sich in dem Bremsdrucksteller 25 ab, wenn das dem Radbremszylinder 14 zugeordnete Antriebsrad beim Anfahren mit einer gegenüber dem anderen Antriebsrad 13 größeren Drehzahl dreht.

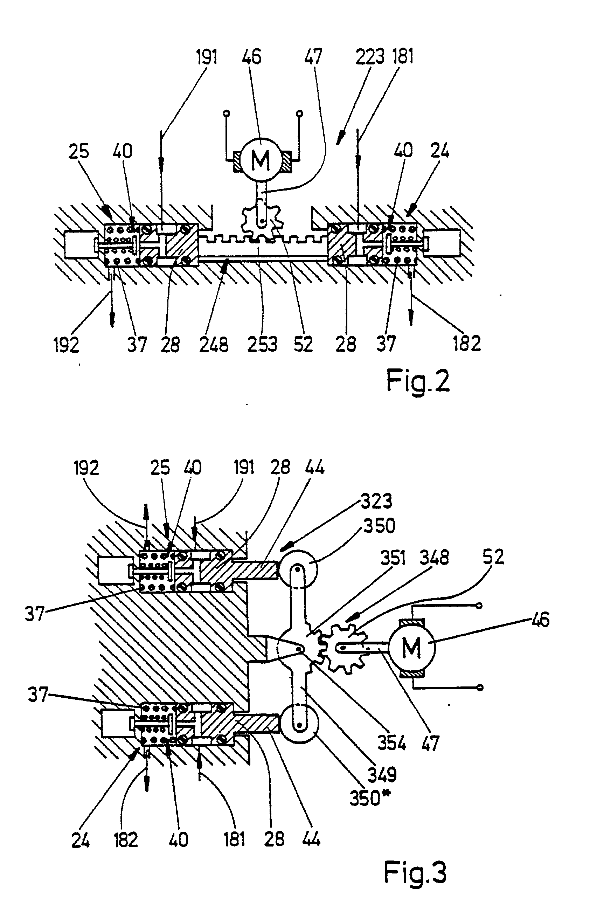

Die in Fig. 2 schematisch dargestellte Anfahrhilfe-Vorrichtung 223 stimmt weitgehend mit der in Fig. 1 dargestellten überein, so daß gleiche Bauteile mit gleichen Bezugszeichen versehen sind. Während die Bremsdrucksteller 24,25 und der Stellmotor 46 mit Rotorwelle 47 und Zahnrad 52 identisch wie in Fig. 1 ausgebildet sind, ist das Umsetzgetriebe 248 modifiziert. Es weist eine Zahnstange 253 auf, die axial verschieblich geführt ist und mit dem Zahnrad 52 in Eingriff steht. An jeder Stirnseite der Zahnstange 253 liegt ein Steuerkolben 28 der beiden Bremsdrucksteller 24,25 unter der Andruckkraft der jeweiligen Rückstellfeder 37 an. Beim Drehen des Stellmotors 46 verschiebt das drehende Zahnrad 52 die Zahnstange 253 entsprechend der Drehrichtung des Stellmotors 46 nach links oder rechts und verschiebt in gleicher Weise wie vorstehend beschrieben einen der beiden Steuerkolben 28.

Bei dem Ausführungsbeispiel der Anfahrhilfe-Vorrichtung 323 in Fig. 3 sind die beiden identisch und wie in Fig. 1 ausgebildeten Bremsdrucksteller 24,25 parallel und im Abstand voneinander angeordnet. Das Umsetzgetriebe 348 weist wiederum einen zweiarmigen Hebel 349 auf, der genau mittig zwischen den beiden Bremsdruckstellern 24,25 um einen ortsfesten Drehpunkt 354 gelagert ist. Der Hebel 349 trägt an jedem Hebelende eine Rolle 350 und eine Rolle 350*, an denen jeweils ein Steuerkolben 28 der beiden Bremdrucksteller 24,25 über ihre Antriebsbolzen 44 unter der Wirkung ihrer Rückstellfedern 37 anliegen. Im Bereich seines Drehpunktes 354 trägt der Hebel 349 ein Zahnsegment 351, das wiederum mit dem auf der Rotorwelle 47 des Stellmotors 46 drehfest sitzenden Zahnrad 52 kämmt. Dreht sich die Rotorwelle 47 infolge eines an den Stellmotor 46 gelangenden Stellsignals um einen bestimmten Drehwinkel, so wird der Hebel 349 verschwenkt und verschiebt einen Steuerkolben 28 der beiden Bremsdrucksteller 24,25, wobei in gleicher Weise wie zu Fig. 1 beschrieben ein Bremsdruck in denjenigen Radbremszylinder 13 bzw. 14 eingesteuert wird, dessen zugeordnetes Antriebsrad die höhere Drehzahl aufweist.

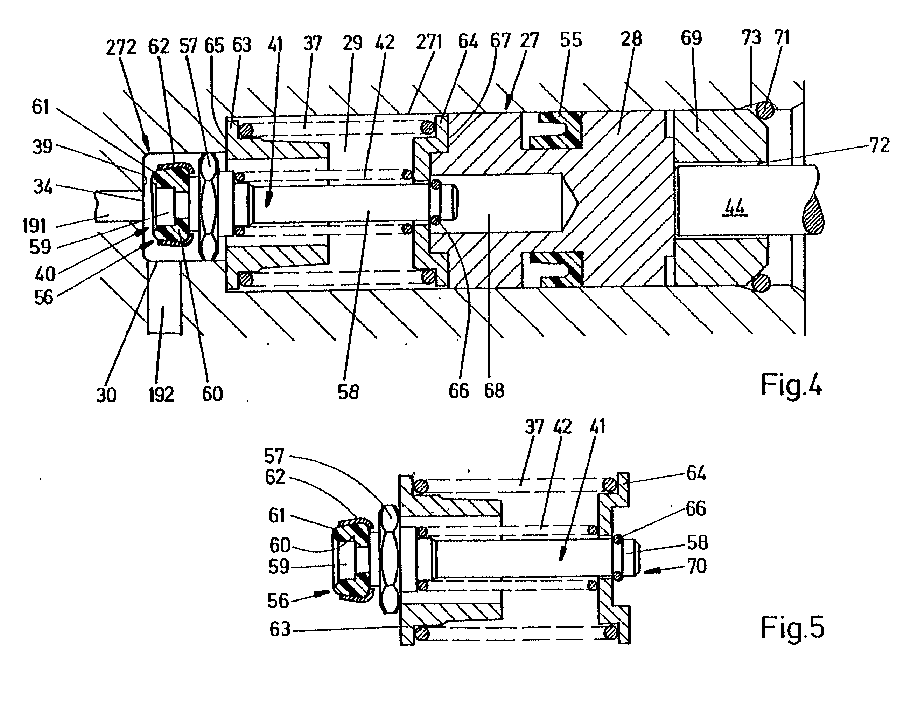

Eine bevorzugte Ausführungsform eines Bremsdruckstellers, wie er als Bremsdrucksteller 24 oder 25 in den Anfahrhilfe-Vorrichtungen 23,223 oder 323 in Fig. 1 - 3 eingesetzt werden kann, ist in Fig. 4 im Längsschnitt dargestellt. Der Steuerzylinder 27 weist zwei verschieden lange Zylinderabschnitte 271 und 272 auf. Im längeren ersten Zylinderabschnitt 271 ist der Steuerkolben 28 axial verschieblich geführt, wobei er durch eine Ringmanschette 55 gegenüber der inneren Zylinderwand des ersten Zylinderabschnittes 271 abgedichtet ist. Im zweiten Zylinderabschnitt 272, dessen lichter Durchmesser gegenüber dem des ersten Zylinderabschnittes 271 reduziert ist, ist das Ventil 40 angeordnet. In dem zweiten Zylinderabschnitt 272, der zusammen mit einem veränderlichen Teil des ersten Zylinderabschnittes 271 den von der Stirnfläche des Steuerkolbens 28 begrenzten Steuerraum 29 des Bremsdruckstellers bildet, ist die Anschlußöffnung 30 zum Anschließen des hier zum Radbremszylinder 14 führenden Bremsleitungsabschnittes 192 radial und die Anschlußöffnung 34 zum Anschließen des zum Hauptzylinder 10 bzw. zu dem Antiblockiersystem 16 führenden Bremsleitungsabschnittes 191 axial eingebracht. Der Ventilsitz 39 umgibt die Anschlußöffnung 34, auf dem sich der Schließkopf 56 des wiederum axial verschieblichen Ventilgliedes 41 aufsetzen kann. Das Ventilglied 41 weist einen über den Schließkopf 56 radial überstehenden Führungsflansch 57 auf, der zur Führung des Ventilgliedes 41 in dem zweiten Zylinderabschnitt 272 dient. Das Ventilglied 41 weist einen Schaft 58 auf, der den ersten Zylinderabschnitt 271 vom Steuerkolben 28 an durchzieht und in dem zweiten Zylinderabschnitt 272 stirnseitig mit einem Tragbund 59 endet. Auf den Tragbund 59 ist ein den Schließkopf 56 bildendes Gummiteil 60 mit stirnseitiger Dichtlippe 61 aufgeschnappt, das den Tragbund 59 hintergreift. Bei geschlossenem Ventil 40 wird die Dichtlippe 61 auf den Ventilsitz 39 aufgepreßt und damit die Anschlußöffnung 34 abgedichtet. Um ein ungewolltes Abziehen des Gummiteils 60 zu verhindern, ist dieses mittels einer Metallarmierung 62 auf dem Tragbund 59 gesichert. Das Gummiteil 60 ist konisch ausgebildet und verjüngt sich zum Ventilsitz 39 hin. Der Flankenwinkel des Konus beträgt etwa 5 - 10°. Das Gummiteil 60 hintergreift den Tragbund 59 und die Metallarmierung 62 hintergreift das Gummiteil 60. Bei entsprechender Ausbildung der jeweiligen Übergreifungsränder wird ein Abziehen des Gummiteils 60 bei Öffnen des Ventils 40 oder bei einem in die Radbremszylinder 13,14 eingesteuerten Bremsdruck sicher vermieden.

Die Rückstellfeder 37 für den Stellkolben 28 stützt sich an zwei das Ventilglied 41, und zwar den Schaft 58, koaxial umschließenden Federtellern 63 und 64 ab. Der eine Federteller 63 liegt dabei an der ringförmigen Übergangsschulter 65 zwischen dem ersten Zylinderabschnitt 271 und dem zweiten Zylinderabschnitt 272 an. Sein lichter Innendurchmesser ist kleiner gewählt als der Außendurchmesser des Führungsflansches 57. Der andere Federteller 64 ist axial verschieblich auf dem Schaft 58 des Ventilgliedes 41 angeordnet und an dem vom Schließkopf 56 abgekehrten Ende des Schaftes 58 an einen Anschlag 66 unter der Wirkung der Rückstellfeder 37 anlegbar. Die Ventilfeder 42 stützt sich einerseits an dem Federteller 64 und andererseits an dem Schaft 58 des Ventilgliedes 41 an. Der Steuerkolben 28 trägt auf seiner den Steuerraum 29 begrenzenden Stirnfläche eine Abstützfläche 67 für den Federteller 64. Der Steuerkolben 28 weist außerdem noch eine zentrale, axial verlaufende Sackbohrung 68 auf, die in der den Steuerraum 29 begrenzenden Stirnfläche des Steuerkolbens 28 mündet. Die Sackbohrung 68 hat eine solche Tiefe, daß bei maximalem Verschiebeweg des Steuerkolbens 28 ein Teilabschnitt des Schaftes 58 des Ventilgliedes 41 ohne Behinderung der Verschiebebewegung des Steuerkolbens 28 in die Sackbohrung 68 eintauchen kann.

Durch das Vorsehen der beiden Federteller 63,64 und deren konstruktive Ausbildung und Anordnung auf dem Ventilglied 41 ist es möglich, das Ventilglied 41 zusammen mit der Rückstellfeder 37 und der Ventilfeder 42 als komplette Baugruppe 70 vorzumontieren. Diese Baugruppe 70 ist in Fig. 5 dargestellt. Wie dort zu sehen ist, liegt der Federteller 63 unter der Druckkraft der Rückstellfeder 37 an dem Führungsflansch 47 an, während der Federteller 64 gegen den Anschlag 66 gelegt wird. Diese vormontierte Baugruppe 70 wird bei der Montage des Bremsdruckstellers in den Steuerzylinder 27, in Fig. 4 von rechts her, eingeschoben, bis der Schließkopf 56 des Ventilgliedes 41 zusammen mit dem Führungsflansch 57 in den zweiten Zylinderabschnitt 272 eintaucht und der Federteller 63 sich an der Übergangsschulter 65 zwischen den Zylinderabschnitten 271 und 272 abstützt. Danach wird der Steuerkolben 28 mit seiner Dichtmanschette 55 eingeschoben und schließlich der Steuerzylinder 27 mit einem Abschlußstück 69 verschlossen. Das Abschlußstück 69 wird durch einen Sicherungsring 71 gehalten, der in eine Ausnehmung 72 in der Zylinderwand eingelegt ist. Das Abschlußstück 69 weist eine zentrale Führungsbohrung 73 auf, in welcher der Antriebsbolzen 44 für den Steuerkolben 28 axial verschieblich geführt ist. Der Antriebsbolzen 44 ist hier als vom Steuerkolben 28 getrenntes separates Bauteil ausgebildet, das an dem Steuerkolben 28 unter der Wirkung des an ihm angreifenden Stellgliedes 26 (in Fig.4 nicht dargestellt) anliegt. Durch die Zweiteiligkeit von Steuerkolben 28 und Antriebsbolzen 44 wird verhindert, daß Querkräfte auf die Kolbenlauffläche eingeleitet werden und zu einer Schwergängigkeit des Steuerkolbens 28 führen.

Die Wirkungsweise dieses Bremsdruckstellers ist die gleiche, wie zu Fig. 1 beschrieben. Durch Verschieben des Steuerkolbens 28 über den vom Stellglied 26 betätigten Antriebskolben 44 wird zunächst das Ventilglied 41 so weit verschoben, bis die Dichtlippe 61 des Schließkopfes 56 auf dem Ventilsitz 39 aufliegt. Bei der weiteren Verschiebebewegung des Steuerkolbens 28 entgegen seiner Rückstellfeder 37 wird dann die Ventilfeder 42 zusammengepreßt, die dadurch zunehmenden Schließdruck auf den Schließkopf 56 ausübt. Da nunmehr der Bremsleitungsabschnitt 191 abgeschlossen ist und der Steuerraum 29, der Bremsleitungsabschnitt 192 und der Radbremszylinder 14 mit Bremsflüssigkeit gefüllt sind, wird mit der Reduzierung des Steuerraumvolumens durch die Verschiebebewegung des Steuerkolbens 28 ein Bremsdruck in den zugeordneten Radbremszylinder 14 eingesteuert, der entsprechend der Drehzahldifferenz zwischen den Antriebsrädern dosiert ist.

Die Erfindung ist nicht auf die vorstehend beschriebenen Ausführungsbeispiele beschränkt. So kann in Abwandlung der Fig.2 das Stellglied 26 auch als Linearmotor ausgebildet werden, dessen Läufer von der Zahnstange 253 gebildet wird. Auch ist ein Antiblockiersystem nicht notwendiger Bestandteil der Bremseinrichtung. Fehlt dieses, so sind die Druckleitungen unmittelbar an dem Hauptbremszylinder angeschlossen. Für die Antriebsräder sind separate Drehzahlsensoren vorzusehen.

**Patentansprüche**

1. Vorrichtung zum Synchronisieren der Drehzahl von Antriebsrädern eines mit einer druckmittelgesteuerten Bremseinrichtung ausgerüsteten Fahrzeugs beim Anfahren durch Belegen des drehzahlhöheren Antriebsrades mit dosiertem Bremsdruck, mit mindestens zwei in jeweils einer Bremsleitung zwischen einem Hauptbremszylinder (10) der Bremseinrichtung und einem Radbremszylinder (12-15) eines der mindestens zwei Antriebsräder eingeschalteten Bremsdruckstellern (24, 25), die jeweils einen in einen Steuerzylinder (27) gegen eine Rückstellfeder (37) axial verschiebbaren Steuerkolben (28) und ein von dem Steuerkolben (28) betätigtes, die Anschlußöffnung (33) des Steuerzylinders (27) zum Hauptbremszylinder (10) steuerndes Ventil (40) aufweist, und mit einem die Steuerkolben (28) gegensinnig antreibenden Stellglied (26), das mit einem von der Drehzahldifferenz der mindestens zwei Antriebsräder abgeleiteten Stellsignal beaufschlagbar ist, dadurch gekennzeichnet, daß das Stellglied (26) als in der einen oder dazu gegensinnigen anderen Richtung antreibender elektrischer Stellmotor (46) ausgebildet ist.

2. Vorrichtung nach Anspruch 1, dadurch gekennzeichnet, daß der Stellmotor (46) ein Rotationsmotor ist, dessen Rotorwelle (47) über ein die Drehbewegung in eine Verschiebebewegung umsetzendes Umsetzgetriebe 5 (48;248;348) auf die Steuerkolben (28) der Bremsducksteller (24,25) einwirkt.

3. Vorrichtung nach Anspruch 2, dadurch gekennzeichnet, daß das Umsetzgetriebe (48) einen zweiarmigen Hebel (49) aufweist, daß das eine Hebelende eine Rolle (50) trägt, an welcher mit den Steuerkolben (28) der zueinander axial fluchtenden Bremsdrucksteller (24,25) in Eingriff stehende Antriebsbolzen (44) unter der Wirkung der Rückstellfedern (37) der Steuerkolben (28) anliegen, und daß das andere Hebelende ein Zahnsegment (51) trägt, das mit einem auf der Rotorwelle (47) sitzenden Zahnrad (52) kämmt.

4. Vorrichtung nach Anspruch 2, dadurch gekennzeichnet, daß das Umsetzgetriebe (348) einen zweiarmigen Hebel (349) aufweist, daß jeder Hebelarm eine Rolle (350,350*) trägt, daß an jeder Rolle (350,350*) ein mit einem Steuerkolben (28) der beiden parallel zueinander angeordneten Bremsdrucksteller (24,25) in Eingriff stehende Antriebsbolzen (44) unter der Wirkung der Rückstellfeder (37) des Steuerkolbens (24,25) anliegt und daß der Hebel (349) in seinem Drehpunkt (354) ein Zahnsegment (351) trägt, das mit einem auf der Rotorwelle (47) sitzenden Zahnrad (52) kämmt.

5. Vorrichtung nach Anspruch 2, dadurch gekennzeichnet, daß das Umsetzgetriebe (248) eine Zahnstange (253) und ein mit dieser kämmendes, auf der Rotorwelle (47) drehfest sitzendes Zahnrad (52) aufweist und daß die Steuerkolben (28) der beiden axial fluchtenden Bremsdrucksteller (24,25) an den beiden Enden der einen gemeinsamen Antriebsbolzen für die Steuerkolben (28) bildenden Zahnstange (253) unter der Kraft ihrer Rückstellfedern (37) anliegen.

6. Vorrichtung nach einem der Ansprüche 1 - 5, dadurch gekennzeichnet, daß der Steuerzylinder (27) einen ersten Zylinderabschnitt (271), in welchem der Steuerkolben (28) gegen die Zylinderwand abgedichtet geführt ist, und einen im Durchmesser reduzierten zweiten Zylinderabschnitt (272) aufweist, in welchem die Anschlußöffnung (34) zum Hauptbremszylinder (10) axial und die Anschlußöffnung (30) zum Radbremszylinder (13,14) radial zur Zylinderachse eingebracht sind, daß das Ventil (40) ein in Achsrichtung des Steuerzylinders (27) verschiebbares Ventilglied (41) mit stirnseitigem Schließkopf (56) aufweist, das in dem zweiten Zylinderabschnitt (272) geführt ist und sich über eine Ventilfeder (42) an dem Steuerkolben (28) abstützt und daß die ringförmige Übergangsschulter (65) zwischen den beiden Zylinderabschnitten (271,272) ein Widerlager zur Abstützung der Rückstellfeder (37) des Steuerkolbens (28) bildet.

7. Vorrichtung nach Anspruch 6, dadurch gekennzeichnet, daß das Ventilglied (41) einen über den Schließkopf (56) radial vorstehenden Führungsflansch (57) aufweist, daß die Rückstellfeder (37) für den Steuerkolben (28) sich einerseits an einem an der Übergangsschulter (65) zwischen den Zylinderabschnitten (271,272) anliegenden, das Ventilglied (41) umschließenden Federteller (63), dessen lichter Innendurchmesser kleiner als der Außendurchmesser des Führungsflansches (57) ist, und andererseits an einem auf dem Ventilglied (41) axial verschiebbar angeordneten zweiten Federteller (64) abstützt, der an einen an dem vom Schließkopf (56) abgekehrten Ende des Ventilgliedes (41) angeordneten Anschlag (66) anlegbar ist, daß die steuerkolbenseitige Abstützung der Ventilfeder (42) an dem zweiten Federteller (64) erfolgt und daß der Steuerkolben (28) eine axiale Sackbohrung (68) zur Aufnahme eines Ventilgliedabschnittes bei seiner Axialverschiebung und eine stirnseitige Abstützfläche (67) für den zweiten Federteller (64) aufweist.

8. Vorrichtung nach Anspruch 6 oder 7, dadurch gekennzeichnet, daß das Ventilglied (41) einen Schaft (58) und einen am Schaftende über den Schaftumfang vorspringenden, vorzugsweise damit einstückigen Tragbund (59) aufweist und daß der Schließkopf (56) von einem auf den Tragbund (59) aufgeschnappten und diesen hintergreifenden Gummiteil (60) mit stirnseitiger Dichtlippe (61) gebildet ist, das auf dem Tragbund (59) mittels einer Metallarmierung (62) gegen Abziehen gesichert ist.

9. Vorrichtung nach einem der Ansprüche 6 - 8, dadurch gekennzeichnet, daß der erste Zylinderabschnitt (271) des Steuerzylinders (27) an seinem vom zweiten Zylinderabschnitt (272) abgekehrten Ende mit einem Verschlußstück (69) abgeschlossen ist und daß in dem Verschlußstück (69) der bis zum Steuerkolben (28) reichende und an diesem anliegende Antriebsbolzen (44) axial verschieblich geführt ist, an dem der Stellmotor (46) unmittelbar oder über ein Umsetzgetriebe (48;248;348) angreift.

## Claims

1. Device for synchronizing the speed of driving wheels of a vehicle equipped with a pressure-medium-controlled braking arrangement during starting by subjecting the driving wheel having the higher speed to metered brake pressure, having at least two brake pressure adjusters (24, 25), which are inserted in in each case one brake line between a master brake cylinder (10) of the braking arrangement and a wheel brake cylinder (12–15) of one of the at least two driving wheels and each of which has a control piston (28) displaceable axially into (sic) a control cylinder (27) against a return spring (37) and a valve (40) which is actuated by the control piston (28) and controls the connection port (33) of the control cylinder (27) leading to the master brake cylinder (10), and having an actuator (26) which drives the control pistons (28) in opposite directions and can be supplied with an actuating signal derived from the speed difference of the at least two driving wheels, characterized in that the actuator (26) is designed as an electric servo motor (46) driving in one direction or the other direction, opposite to the latter.

2. Device according to Claim 1, characterized in that the servo motor (46) is a rotary motor, the rotor shaft (47) of which acts on the control pistons (28) of the brake pressure adjusters (24, 25) via a conversion mechanism (48; 248; 348) converting the rotary movement into a translational movement.

3. Device according to Claim 2, characterized in that the conversion mechanism (48) has a two-armed lever (49), in that one lever end carries a roller (50) against which driving pins (44) in engagement with the control pistons (28) of the mutually axially aligned brake pressure adjusters (24, 25) rest under the action of the return springs (37) of the control pistons (28), and in that the other lever end carries a toothed segment (51) which meshes with a gear (52) seated on the rotor shaft (47).

4. Device according to Claim 2, characterized in that the conversion mechanism (348) has a two-armed lever (349), in that each lever arm carries a roller (350, 350*), in that a driving pin (44) in engagement with a control piston (28) of the two brake pressure adjusters (24, 25) arranged in parallel with each other rests against each roller (350, 350*) under the action of the return spring (37) of the control piston (24, 25), and in that, in its fulcrum (354), the lever (349) bears a toothed segment (351) which meshes with a gear (52) seated on the rotor shaft (47).

5. Device according to Claim 2, characterized in that the conversion mechanism (248) has a rack (253) and a gear (52) meshing with the latter and seated on the rotor shaft (47) in a manner fixed in terms of rotation and in that the control pistons (28) of the two axially aligned brake pressure adjusters (24, 25) rest against the two ends of the rack (253) forming a common driving pin for the control pistons (28) under the force of their return springs (37).

6. Device according to one of Claims 1–5, characterized in that the control cylinder (27) has a first cylinder section (271), in which the control piston (28) is guided in a manner sealed with respect to the cylinder wall, and a second cylinder section (272) of reduced diameter in which the connection port (34) leading to the master brake cylinder (10) is made axially and the connection port (30) leading to the wheel brake cylinder (13, 14) is made radially to the cylinder axis, in that the valve (40) has a valve member (41) which is displaceable in the axial direction of the control cylinder (27), has a closing head (56) at the front end, is guided in the second cylinder section (272) and is supported against the control piston (28) via a valve spring (42), and in that the annular transitional shoulder (65) between the two cylinder sections (271, 272) forms a counter abutment for supporting the return spring (37) of the control piston (28).

7. Device according to Claim 6, characterized in that the valve member (41) has a guiding flange (57) projecting radially beyond the closing head (56), in that the return spring (37) for the control piston (28) is supported, on the one hand, against a spring plate (63) which rests against the transitional shoulder (65) between the cylinder sections (271, 272), surrounds the valve member (41) and the clear inside diameter of which is smaller than the outside diameter of the guiding flange (57), and, on the other hand, against a second spring plate (64) which is arranged in axially displaceable fashion on the valve member (41) and can be placed against a stop (66) arranged at that end of the valve member (41) which faces away from the closing head (56), in that, at the control-piston side, the valve spring (42) is supported against the second spring plate (64) and in that the control piston (28) has an axial blind bore (68) for receiving a valve member section during its axial displacement and a supporting face (67) at the front end for the second spring plate (64).

8. Device according to Claim 6 or 7, characterized in that the valve member (41) has a stem (58) and a supporting collar (59) which projects above the stem circumference at the end of the stem and is preferably of one piece with it, and in that the closing head (56) is formed by a rubber part (60) with a sealing lip (61) at the front end, which is snapped onto the supporting collar (59) and engages behind it and is secured against being pulled off on the supporting collar (59) by means of a metal sheath (62).

9. Device according to one of Claims 6–8, characterized in that, at its end facing away from the second cylinder section (272), the first cylinder section (271) of the control piston (27) is sealed off with a plug (69) and in that the driving pin (44), which extends as far as the control piston (28) and rests against the latter, and on which the servo motor (46) engages directly or via a conversion mechanism (48; 248; 348), is guided in axially displaceable fashion in the plug (69).

**Revendications**

1. Dispositif pour synchroniser, lors du démarrage, la vitesse de rotation des roues motrices d'un véhicule équipé d'un dispositif de freinage commandé par un fluide sous pression en soumettant la roue motrice dont la vitesse est la plus élevée à une pression de freinage dosée, dispositif comportant au moins deux organes de réglage de la pression de freinage (24, 25) branchés sur respectivement une canalisation de freinage entre un cylindre principal de freinage (10) du dispositif de freinage et un cylindre de frein de roue (12 à 15) d'une des deux roues motrices, ces organes de réglage de la pression de freinage comportant respectivement un piston de commande (28) susceptible de se déplacer axialement contre l'action d'un ressort de rappel (37) dans un cylindre de commande (27), et une soupape (40) actionnée par le piston de commande (28) et commandant l'ouverture de raccordement (33) du cylindre de commande (27) vers le cylindre principal de freinage (10), et un organe de réglage (26) étant prévu qui entraîne les pistons de commande (28) en sens inverse, et auquel est appliqué un signal de réglage dérivé de la différence de vitesse de rotation entre les deux roues motrices, dispositif caractérisé en ce que l'organe de réglage (26) est un moteur électrique de réglage assurant un entraînement dans un sens ou dans le sens opposé.

2. Dispositif selon la revendication 1, caractérisé en ce que le moteur de réglage (46) est un moteur rotatif dont l'arbre de rotor (47) agit sur les pistons de commande (28) des organes de réglage de la pression de freinage (24, 25) par l'intermédiaire d'un mécanisme (48; 248; 348) convertissant le mouvement de rotation en un mouvement de translation.

3. Dispositif selon la revendication 2, caractérisé en ce que le mécanisme convertisseur (48) comporte un levier à deux bras (49), l'une des extrémités du levier portant un galet (50) contre lequel s'appliquent, sous l'action des ressorts de rappel (37) des pistons de commande (28), des axes d'entraînement (44) se trouvant en prise avec les pistons de commande (28) des organes de réglage de la pression de freinage (24, 25) alignés axialement, tandis que l'autre extrémité du levier porte un segment denté (51) qui engrène avec une roue dentée (52) placée sur l'arbre de rotor (47).

4. Dispositif selon la revendication 2, caractérisé en ce que le mécanisme convertisseur (348) comporte un levier à deux bras (349), dont chaque bras porte un galet (350, 350*), tandis que sur chacun de ces galets (350, 350*) s'applique, sous l'action du ressort de rappel (37) du piston de commande (28), un axe d'entraînement (44) se trouvant en prise avec un piston de commande (28) des deux organes de réglage de la pression de freinage (24, 25) disposés parallèlement l'un à l'autre, et le levier (349) porte au voisinage de son point de rotation (354) un segment denté (351) qui engrène avec une roue dentée (52) placée sur l'arbre de rotor (47).

5. Dispositif selon la revendication 2, caractérisé en ce que le mécanisme convertisseur (248) comporte une crémaillère (253) et une roue dentée (52) engrenant avec cette crémaillère, et solidaire en rotation de l'arbre de rotor (47), tandis que les pistons de commande (28) des deux organes de réglage d'impression de freinage (24, 25) alignés axialement s'appliquent, sous l'action de leurs ressorts de rappel (37), contre les deux extrémités de la crémaillère (253) constituant un axe d'entraînement commun pour les pistons de commande (28).

6. Dispositif selon une des revendications 1 à 5, caractérisé en ce que le cylindre de commande (27) comporte un premier tronçon de cylindre (271) dans lequel le piston de commande (28) est guidé en étant étanché vis à vis de la paroi du cylindre, et un second tronçon de cylindre (272) réduit en diamètre, sur lequel l'ouverture de raccordement (34) vers le cylindre principal de freinage (10) est rapportée parallèlement à l'axe du cylindre, tandis que l'ouverture de raccordement (30) vers le cylindre de frein de roue (13, 14) est rapportée radialement par rapport à l'axe du cylindre, cependant que la soupape (40) comporte un organe de soupape (41) susceptible de se déplacer en direction axiale du cylindre de commande (27) et comportant, du côté frontal une tête de fermeture (56), cet organe de soupape étant guidé dans le deuxième tronçon de cylindre (272) et prenant appui, par l'intermédiaire d'un ressort de soupape (42) contre le piston de commande (28), tandis que l'épaulement annulaire de transition (65) entre les deux tronçons de cylindres (271, 272) constitue un contre-appui pour le ressort de rappel (37) du piston de commande (28).

7. Dispositif selon la revendication 6, caractérisé en ce que l'organe de commande (41) comporte une collerette de guidage (57) faisant saillie radialement au-delà de la tête de fermeture (56), tandis que le ressort de rappel (37) pour le piston de commande (28) prend appui, d'une part, contre une coupelle de ressort (63) entourant l'organe de soupape (41) et dont le diamètre interne est plus petit que le diamètre externe de la collerette de guidage (57), cette coupelle de ressort s'appliquant contre l'épaulement de transition (65) entre les tronçons de cylindres (271, 272), et le ressort de rappel (37) prend appui, d'autre part, contre une seconde coupelle de ressort (64) disposée sur l'organe de soupape (41) de façon à pouvoir à se déplacer axialement, et qui est susceptible de s'appliquer contre une butée (66) disposée à l'extrémité opposée à la tête de fermeture (56) de l'organe de soupape (41), cependant que le ressort de soupape (42) prend appui côté piston de commande contre cette seconde coupelle de ressort (64), et que le piston de commande (28) comporte un perçage borgne axial (68) pour recevoir un tronçon de l'organe de soupape, lors de son déplacement axial, et une surface frontale d'appui (67) pour la seconde coupelle de ressort (64).

8. Dispositif selon la revendication 6 ou la revendication 7, caractérisé en ce que l'organe de soupape (41) comporte un fût (58) et un bandeau porteur venu de préférence, d'une seule pièce avec le fût, et faisant saillie au-delà de la périphérie du fût à l'extrémité de celui-ci, tandis que la tête de fermeture (56) est constituée par une pièce en caoutchouc (60) avec une lèvre d'étanchéité frontale (61), cette pièce en caoutchouc étant emboîtée sur le bandeau porteur (59) et venant en prise avec lui par l'arrière, en étant bloquée sur le bandeau porteur (59) par une armature métallique (62).

9. Dispositif selon une des revendications 6 à 8, caractérisé en ce que le premier tronçon de cylindre (271) du cylindre de commande (27) est fermé par une pièce de fermeture (69) à son extrémité opposée au deuxième tronçon de cylindre (272), tandis que dans cette pièce de fermeture (69) est guidé, en étant susceptible de se déplacer axialement, l'axe d'entraînement (44) s'étendant jusqu'au piston de commande (28) et s'appliquant sur celui-ci, le moteur de réglage (46) attaquant cet axe d'entraînement (44) directement ou bien par l'intermédiaire d'un mécanisme convertisseur (48; 248; 348).

Fig.1

Fig.2

Fig.3

EP 0 285 763 B1

Fig.4

Fig.5